# FASCICULE DE BREVET EUROPEEN

(11) **EP 4 106 515 B1**
(45) Date de publication et mention de la délivrance du brevet: **08.11.2023**
(21) Numéro de dépôt: 21703229.1
(22) Date de dépôt: 02.02.2021
(51) Int. Cl.: A01G 27/00, A01G 31/02

(54) **SYSTÈME DE CULTURE DE PLANTES HORS-SOL**
ERDLOSES PFLANZENZUCHTSYSTEM
SOILLESS PLANT-GROWING SYSTEM

(30) Priorité: 17.02.2020 FR 2001534
(43) Date de publication de la demande: 28.12.2022
(73) Titulaire: Farm3, 25300 Verrieres de Joux (FR)
(72) Inventeur: SCHMITT, Romain, 75116 PARIS (FR)
(74) Mandataire: Icosa
(86) Numéro de dépôt international: PCT/EP2021/052405
(87) Numéro de publication internationale: WO 2021/165031

(56) Documents cités:
- WO-A1-2015/123725
- IT-A1- RM20 090 674
- US-A1- 2016 029 582
- US-A1- 2016 192 594

## Description

### Domaine technique

La présente invention concerne un système de culture de plantes hors-sol.

Le domaine de l'invention est, de manière non limitative, celui de la culture des plantes. Plus particulièrement, mais de manière non limitative, le domaine de l'invention est celui de la culture verticale.

### État de la technique

L'aéroponie est une forme de culture hors-sol permettant de cultiver des plantes sans terre. Les plantes sont supportées par des structures de support de sorte que leurs racines sont à l'air. L'approvisionnement en eau et en nutriments est réalisé par des pulvérisations régulières de solutions contenant des minéraux. Les plantes utilisant moins d'énergie pour absorber l'eau, elles peuvent en employer davantage pour le développement des parties supérieures (tiges feuilles fruits, etc.). Cette technique de culture est très économique en eau et en nutriments et présente un grand rendement.

US2016/029582 A1 divulgue un système de culture et une structure de support de plantes qui peut comprendre un ou plusieurs pieds supportant au moins un ou plusieurs montants, sur lesquels une pluralité de plantes peut être positionnée. Un système de distribution de nutriments peut être positionné entre des montants opposés pour fournir des éléments nutritifs à la zone racinaire de plantes, ledit système de distribution de nutriments pouvant être positionné de manière adjacente à chaque montant opposé dans une chambre intérieure de la structure de support de plantes.

Une méthode pour réaliser la pulvérisation et donc pour obtenir de fines gouttes de solution consiste en la propulsion de solution par une pompe à haute pression à travers des buses de pulvérisation (appelée également *aéroponie haute pression*). Cette méthode a cependant quelques inconvénients qui sont les suivants :
- Les buses peuvent se boucher, demandant ainsi un entretien régulier. Il est notamment impossible de faire passer des solutions organiques (au lieu de solutions à base d'engrais chimiques) car étant trop visqueuses, elles boucheraient les buses instantanément. Aussi, si les plantes ne reçoivent la quantité de solution nutritive requise (par exemple, 3s de pulvérisation toutes les 5 minutes), les racines s'assèchent car il n'y a pas de milieu pour temporiser et la plante meurt en l'espace d'une heure.
- Le dosage des nutriments est d'autant plus complexe que chaque pulvérisation compte.
- Chaque plante a des besoins différents, notamment en nutriments.
- Le système d'aéroponie utilise une pompe qui s'use du fait d'être activée et désactivée de manière répétitive. De plus, elle ne délivre une pression demandée que pour un certain nombre de buses.

Le but de présente invention est de disposer d'un système de culture permettant de remédier à au moins un de ces inconvénients.

### Exposé de l'invention

Cet objectif est atteint avec un système de culture de plantes hors-sol, le système comprenant une structure de support apte à accueillir les plantes, la structure de support comprenant une pluralité d'espaces fermés étanches à la lumière, chaque espace fermé étant apte à accueillir les racines d'une plante de sorte à ce que les racines de chaque plante se trouvent dans un des espaces fermés, le système comprenant :
- une tête de pulvérisation comprenant au moins une buse de pulvérisation comprenant un pulvérisateur piézoélectrique,
- des moyens d'approvisionnement d'au moins une solution de nutriments pour plantes,
- des moyens de déplacement agencés pour déplacer la tête de pulvérisation entre les espaces fermés, et
- des moyens de commande agencés pour :
   ∘ commander l'au moins une buse,
   ∘ commander les moyens de déplacement de sorte à déplacer la tête de pulvérisation entre les espaces fermés,
la tête de pulvérisation étant agencée pour pulvériser la solution de nutriments dans chaque espace fermé pendant une durée et avec une fréquence prédéterminées.

Le système selon la présente invention permet l'utilisation combinée d'un nébuliseur ou pulvérisateur à ultrasons et une buse. La buse comprenant le pulvérisateur présente une faible consommation énergétique et de ce fait ne chauffe pas pendant son fonctionnement. Elle peut être utilisée pour des solutions visqueuses, c'est-à-dire des mélanges complexes, comme des engrais organiques.

La tête de pulvérisation avec l'au moins une buse est mobile le long d'une ou plusieurs structures de support des plantes. Plusieurs structures de support forment un mur de culture. La ou les mêmes buses peuvent donc être utilisées pour une pluralité de structures de support et d'un grand nombre de plantes. Le système selon l'invention est ainsi très économique.

Les moyens d'approvisionnement peuvent comprendre :
- des moyens de stockage d'une pluralité de nutriments, et
- une source d'eau filtrée.

Les moyens de stockage de nutriments et la source d'eau sont hydrauliquement couplés à l'au moins une buse par un système de pompes.

Selon un mode de réalisation particulièrement avantageux, les moyens de stockage peuvent comprendre une pluralité de réservoirs, chaque réservoir comprenant un nutriment pour plantes.

Les moyens d'approvisionnement peuvent comprendre au moins un réservoir de dosage, ou de mixage, agencé pour mixer au moins un des nutriments avec de l'eau afin d'obtenir une solution de nutriments.

La solution obtenue dans le réservoir de dosage est ainsi destinée à un type de plantes présentes dans la structure de support. Lorsque la tête de pulvérisation se déplace le long de la structure vers un autre type de plantes ayant d'autres besoins, une autre solution adaptée à ce type de plantes doit alors être dosée dans le réservoir de dosage.

De préférence, les moyens de commande sont agencés pour doser un ou plusieurs nutriments en fonction des plantes présentes dans la structure.

Selon un mode de réalisation préféré, le système selon l'invention peut comprendre en outre des moyens de nettoyage configurés pour nettoyer l'au moins une buse entre des pulvérisations de solutions de nutriments différentes.

Ainsi, lorsque la même buse est amenée à pulvériser des solutions de nutriments différentes, par exemple en se déplaçant le long du mur de culture, la buse est nettoyée de tout résidu de la solution précédente avant de pulvériser la solution suivante, afin de garantir que la solution suivante ne soit pas contaminée par des résidus de la solution précédente.

Les moyens de nettoyage peuvent comprendre un réservoir de nettoyage comprenant une solution de nettoyage. La tête de pulvérisation peut alors pulvériser la solution de nettoyage dans un espace fermé avant et/ou après la pulvérisation de solution de nutriment.

La solution de nettoyage doit être non nocif pour les plantes. La solution de nettoyage peut être, par exemple, une solution d'acide hypochloreux.

Selon un mode de réalisation avantageux, les moyens d'approvisionnement peuvent comprendre des moyens de mesure agencés pour mesurer une teneur en nutriments de la solution.

La mesure peut être réalisée, par exemple, en déterminant la composition chimique de la solution, ou de sa valeur pH.

De manière avantageuse, les moyens de mesure peuvent être agencés pour fournir des mesures de la teneur en nutriments en temps réel.

Les moyens de déplacement comprennent de préférence des rails horizontaux et/ou verticaux le long desquels la tête de pulvérisation peut se déplacer.

Les moyens de déplacement peuvent comprendre un moteur agencé pour déplacer la tête sur les rails. Le moteur peut être positionné sur la tête de pulvérisations. Le moteur peut être un moteur pas-à-pas et contrôlé par une carte pilote de moteur pas-à-pas.

Selon un exemple, le moteur est relié à une chaine porte-câbles pour propulser la tête de pulvérisation le long des rails.

Les moyens de commande comprennent de préférence au moins un microcontrôleur. Il permet notamment de contrôler le déplacement de la tête et la durée et la fréquence de la pulvérisation, en activant et désactivant le moteur et la pulvérisation.

Le microcontrôleur peut être agencé sur la tête de pulvérisation, par exemple sur le moteur.

De manière avantageuse, le microcontrôleur reçoit des commandes via une unité centrale communiquant avec un cloud. Dans le cloud sont stockés des bases de données comprenant des informations sur les plantes et des instructions de pulvérisation en fonction de la plante (fréquence et durée de pulvérisation, type de solution de nutriments), etc.

Selon un mode de réalisation particulièrement avantageux, les moyens d'approvisionnement peuvent former un circuit fermé.

Pour cela, le système de culture peut en outre comprendre des moyens pour recycler l'au moins une solution de nutriments.

Ainsi, la solution de nutriments pulvérisée dans les espaces fermés contenant les racines des plantes (également appelés chambres racinaires) et qui n'a pas été absorbée complètement par les racines, est récupérée et/ou recyclée pour être réutilisée lors d'une prochaine pulvérisation.

Selon un premier exemple, la solution récupérée peut être filtrée par un système à osmose inverse qui en retient les nutriments, afin d'obtenir de l'eau purifiée. Cette eau purifiée peut à nouveau servir de source d'eau filtrée et être mélangée avec des nutriments pour obtenir une nouvelle solution à pulvériser.

Selon un deuxième exemple, la solution non utilisée peut directement être récupérée dans un réservoir, par exemple dans le réservoir de dosage duquel la solution a été puisée auparavant, pour être réutilisée lors de la prochaine pulvérisation. Dans ce cas, la solution peut être réutilisée pendant un certain temps, par exemple pendant une semaine, puis elle est remplacée.

Selon un mode de réalisation particulièrement avantageux, le système peut comprendre en outre au moins un ventilateur par espace fermé, le ventilateur étant disposé dans l'espace fermé de sorte à pouvoir ventiler de la solution pulvérisée dans l'ensemble de l'espace fermé.

Ainsi, lorsque la solution est pulvérisée dans un espace fermé (ou une chambre racinaire), l'au moins un ventilateur est activé permettant de s'assurer que la brume produite par la pulvérisation entoure bien les racines de toutes les plantes poussant dans cette chambre de manière uniforme.

### Description des figures et modes de réalisation

D'autres avantages et caractéristiques apparaîtront à l'examen de la description détaillée d'exemples nullement limitatifs, et des dessins annexés sur lesquels :
- la Figure 1 est une représentation schématique partielle d'une tête de pulvérisation du système de culture selon un mode de réalisation de l'invention,
- la Figure 2 est une représentation schématique partielle du système selon un mode de réalisation de l'invention,
- la Figure 3 montre des vues en perspective d'une structure de support de plantes du système selon un mode de réalisation,
- la Figure 4 montre des représentations schématiques de pots de plantes pour la structure de support du système,
- la Figure 5 est une représentation schématique d'une tête de pulvérisation avec des moyens de déplacement selon un mode de réalisation du système, et
- la Figure 6 est un schéma hydraulique du système selon un mode de réalisation de l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

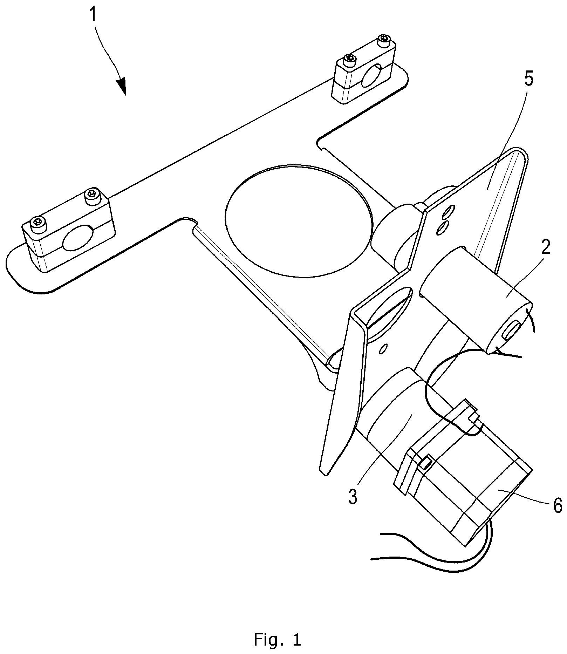

Un système de culture selon des modes de réalisation de l'invention sera décrit par la suite en référence aux Figures 1 à 5.

La Figure 1 est une représentation schématique d'un exemple de réalisation non-limitatif d'une tête de pulvérisation d'un système de culture selon l'invention.

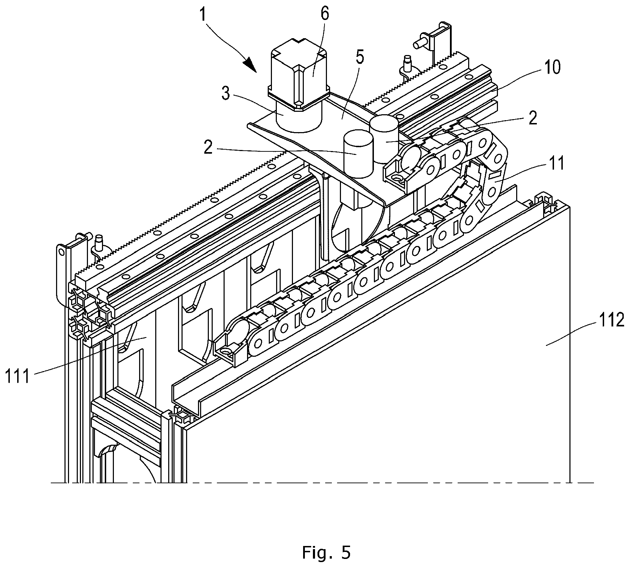

La tête de pulvérisation 1, représenté partiellement sur la Figure 1, comprend un support 5 sur lequel est disposé au moins une buse de pulvérisation 2. La tête de pulvérisation 1 permet de pulvériser une solution de nutriments sur des plantes, et notamment sur leurs racines. Dans l'exemple représenté sur la Figure 5, deux buses 2 sont présentes. Les deux buses 2 peuvent être utilisées simultanément lors d'une pulvérisation, ou alternativement. La deuxième buse permet également à la tête de continuer de fonctionner dans le cas où la première buse 2 est défaillante.

La tête de pulvérisation 1 comprend également une pompe 6 pour chaque buse 2 pour amener de la solution de nutriments à ces buses 2. Cette pompe 6 est de préférence une pompe péristaltique.

La pulvérisation ultraponique est réalisée par l'acheminement, par la pompe 6, d'une solution à pulvériser vers la buse 2. La buse 2 comprend un moteur, ou élément, piézoélectrique et une membrane en céramique. Le moteur piézoélectrique est agencé pour faire vibrer la membrane à une fréquence assurant une dispersion de la solution en sortie de la buse en gouttelettes de taille adaptée à l'absorption par des racines de plantes. Une taille optimale pour l'absorption par les racines est d'environ 40 µm.

La buse 2 montrée sur la Figure 1 est une buse de la société Tekceleo.

Le système selon l'exemple comprend un moteur 3 agencé sur la tête de pulvérisation 1. Ce moteur 3 permet de déplacer la tête lors de la pulvérisation de solution de nutriments, comme il sera décrit plus en détails ci-dessous. Le moteur 3 peut être, par exemple, un moteur pas-à-pas.

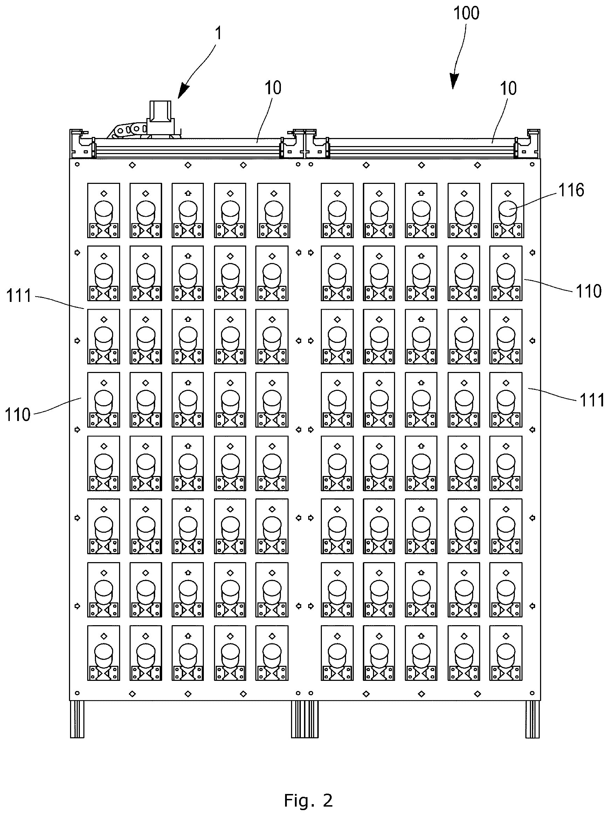

La Figure 2 montre schématiquement un mode de réalisation d'un système de culture de plantes selon la présente invention.

Le système 100, selon l'exemple représenté sur la Figure 2, comprend deux structures 110 de support pour les plantes. On considère que toutes les structures 110 de support comprennent les mêmes caractéristiques que la structure 110 décrite par la suite et que la description du système 100 selon l'invention restera valable en remplaçant la structure 110 de support par « l'au moins une structure de support » ou « chaque structure de support ». Une structure de support 110 peut également être appelé « étagère » par la suite.

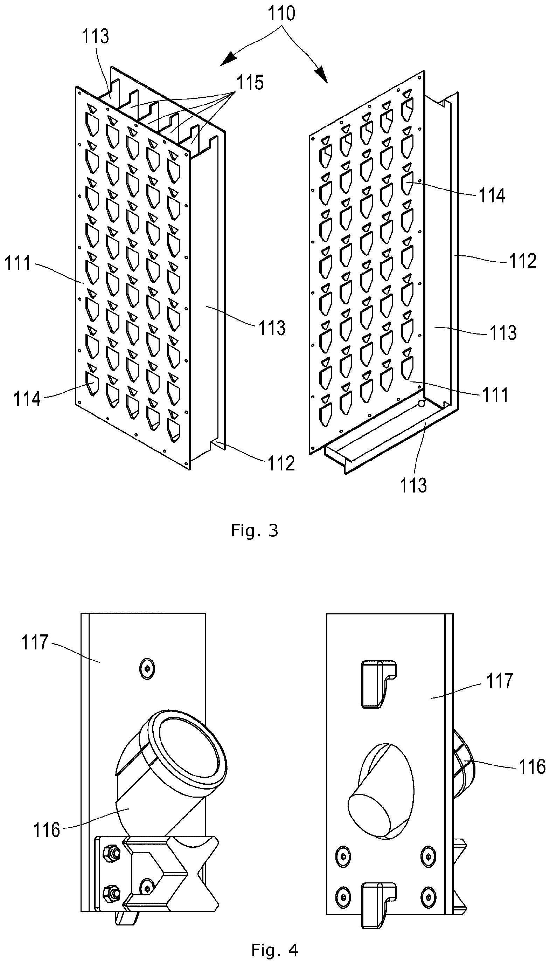

La structure de support 110 consiste en un mur creux, comme illustré sur la Figure 3, selon deux perspectives différentes. Le mur creux est formé d'un panneau de façade 111, un panneau de dos 112 et quatre panneaux de côté 113 (celui du haut n'est pas montré). Des panneaux intérieurs 115 séparent le mur en plusieurs colonnes formant des espaces fermés, également appelés chambres racinaires.

Le panneau de façade 111 possède une pluralité d'ouvertures 114 qui constituent des emplacements pour les plantes. Chaque emplacement 114 permet de recevoir un pot 113, par exemple un pot percé, prévue pour accueillir une plante de sorte à ce que les racines de la plante se trouvent à l'intérieur de la structure 110, dans une chambre racinaire.

Les chambres racinaires sont des espaces fermés ce qui signifie qu'ils sont étanches à la lumière et éventuellement à l'air. Ceci permet d'éviter la contamination des racines par des pathogènes tels que des bactéries ou virus, et des micros-algues. Les micros-algues favorisent le développement de maladies des plantes, peuvent salir le système de culture et recouvrir les racines, les empêchant ainsi de recevoir la solution de nutriments. Même si la chambre racinaire n'est pas complètement étanche à l'air, l'obscurité permet d'empêcher le développement des micro-algues dans ce milieu humide.

Selon un exemple, dans le cas d'une pulvérisation par le haut du mur creux 110, le panneau fermant le haut du mur creux 110 peut être pourvu d'un clapet pour chaque chambre racinaire. Ce clapet s'ouvre lorsque la tête de pulvérisation 1 passe au-dessus de celui-ci pour laisser passer la brume de solution et se referme après la pulvérisation.

Le système 100 selon l'invention peut comporter un ou plusieurs de ces structures 110 de support, pour former un mur de support, ou de culture.

Un mur de culture vertical fait typiquement 3 mètres de haut.

La Figure 4 illustre un exemple d'un pot percé 116, des deux côtés, dans son support 117 à insérer dans une ouverture 114 de la structure de support 110. D'autres formes de pots sont bien sûr possibles, en fonction des caractéristiques de pousse de la plante (vers le haut, taille de la plante, etc.).

Le système 100 selon l'invention comprend des moyens de déplacement agencés pour déplacer la tête 1 de pulvérisation entre les espaces fermés de la structure 110 de support.

La Figure 5 montre un mode de réalisation des moyens de déplacement comprenant des rails horizontaux 10. Le rail horizontal 10 illustré sur la Figure 5 est disposé en haut d'une paroi 111 d'une structure 110 de support de plantes. La tête de pulvérisation 1 peut être propulsée le long de ce rail 10 grâce à son moteur 3. La propulsion peut être réalisée, par exemple, au moyen d'un système d'engrenage entre le moteur 3 et le rail 10.

Comme illustré sur la Figure 5, une chaine porte-câble 11 reliée à la tête de pulvérisation est prévue pour contenir et protéger des câbles pour l'alimentation électrique des buses 2, du moteur 3 et des pompes 6 ainsi que les câbles hydrauliques pour l'acheminement des solutions aux buses 2.

Selon des modes de réalisation avantageux, un même rail 10 peut courir le long d'un mur de support composé de plusieurs structures de support 110. Une seule tête de pulvérisation 1 peut alors servir pour se déplacer le long du rail 10 pour pulvériser une solution sur les plantes présentes dans ce mur de support.

Les moyens de déplacement comprennent également le moteur agencé sur la tête de pulvérisation 1. Le moteur 3 permet de déplacer la tête 1 sur les rails 10.

Alternativement ou en plus, les moyens de déplacement peuvent également comprendre des rails verticaux. Dans ce cas, un rail vertical doit être prévu pour chaque chambre racinaire.

La tête de pulvérisation 1, du fait de sa mobilité, peut également être appelée « robot nébuliseur ».

Le système de culture selon la présente invention comprend des moyens d'approvisionnement de solutions de nutriments pour les plantes dans les structures 110. Ces moyens d'approvisionnement peuvent comprendre tous les réservoirs, pompes, conduits, etc., nécessaires pour le stockage et le dosage des nutriments et pour le stockage, l'acheminement et l'évacuation des solutions de nutriments.

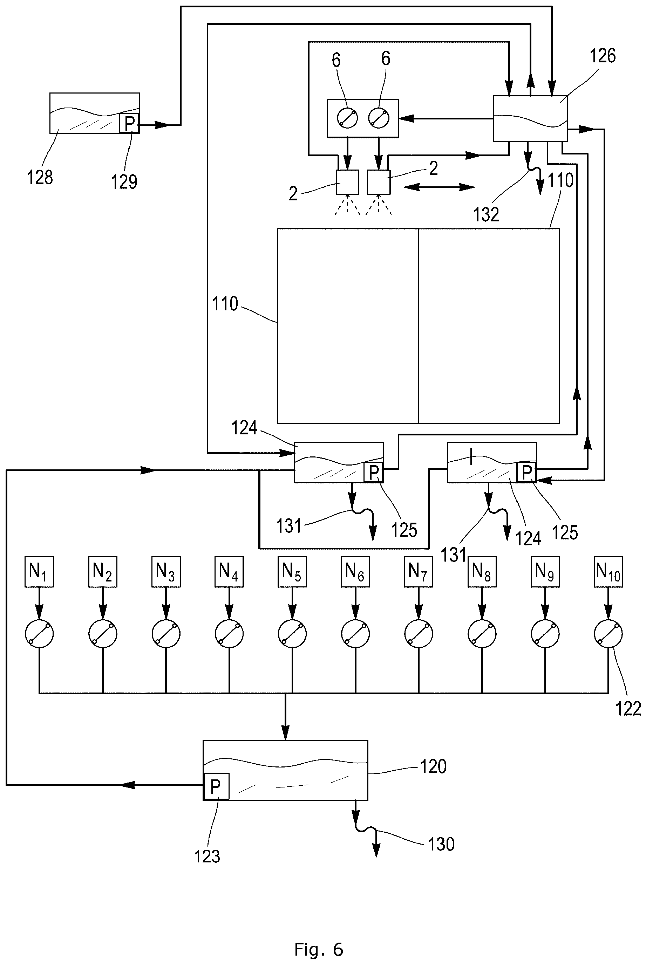

La Figure 6 illustre un exemple de réalisation d'un schéma hydraulique pour le système 100 selon l'invention. Dans l'exemple représenté, il y a deux structures 110 de support de plantes, formant un mur de support. Les moyens d'approvisionnement comprennent :
- des bouteilles de stockage de nutriments pures N_{X} (X = 1...10 dans l'exemple représenté),
- un réservoir de dosage, ou de mixage, 120 dans lequel un ou plusieurs nutriments peuvent être mélangés avec de l'eau, de préférence filtrée, pour constituer une solution de nutriments,
- un réservoir de stockage 124 pour chaque structure 110 (donc deux réservoirs de stockage 124 dans l'exemple représenté) pour stocker la solution de nutriments adaptée aux plantes présentes dans chaque structure 110, en quantité suffisante pour une certaine durée (par exemple, quelques jours ou une semaine),

- un réservoir, dit intermédiaire, 126 pour stocker la solution de nutriments nécessaire pour une séance de pulvérisation pour une étagère 110,
- une pompe péristaltique 122 pour chaque bouteille de nutriment N_{X} pour pomper le nutriment concerné dans le réservoir de dosage 120,
- un réservoir de nettoyage 128 pour stocker une solution de nettoyage de la buse 2 ou des buses 2,
- des pompes à eau 123, 125, 129 pour pomper la solution du réservoir de dosage 120 dans le réservoir de stockage 124, du réservoir de stockage 124 dans le réservoir intermédiaire 126, et du réservoir de nettoyage 128 dans le réservoir intermédiaire 126, respectivement, et
- éventuellement, une pompe 6 pour chaque buse 2.

Une source d'eau filtrée n'est pas représentée sur le schéma de la Figure 6. L'arrivée d'eau peut par exemple être couplée à une membrane d'osmose inverse pour filtrer l'eau, avant de l'acheminer dans le réservoir de dosage 120. La source d'eau filtrée peut également être constituée par de l'eau récupérée, recyclée et filtrée.

Le système 100 comprend également des moyens d'évacuation. Tous les réservoirs 120, 124, 126, 128 peuvent notamment être connectés à l'égout 130, 131, 132.

Les nutriments peuvent comprendre : phosphore, azote, potassium, calcium, souffre, magnésium, micronutriments, de l'engrais organique, des stabilisateurs de pH (ph UP, ph Down), etc. Le mélange de plusieurs de ces nutriments permet de les doser avec précision de manière parfaitement adaptée aux besoins de chaque plante, tout en contrôlant le pH. Ainsi, il est possible de faire pousser tout type de plante dans un même système de culture.

Les nutriments peuvent se présenter sous forme de solutions également, appelées solutions initiales. D'autres solutions initiales que celles mentionnées peuvent bien sûr être utilisées.

La solution de nutriments est obtenue dans le réservoir de dosage/mixage 120. Les solutions de nutriments N_{X} peuvent être dosées de façon automatique, comme il sera décrit plus en détails ci-dessous.

Les solutions mixées dans le réservoir de dosage 120 sont stockées dans les réservoirs de stockage 124 sous les étagères. A chaque étagère 110 est associé son propre réservoir de stockage 124, contenant la solution de nutriments adaptée aux plantes présentes dans l'étagère. La solution est acheminée par une pompe à eau 125, associée à chaque réservoir de stockage 124 et contrôlée par un microcontrôleur, vers le réservoir intermédiaire 126.

Le réservoir intermédiaire 126 peut se trouver à l'intérieur ou à l'extérieur de la buse 2. Lorsqu'il s'agit d'un réservoir extérieur à la buse, lors de la pulvérisation, la pompe 6 est activée et amène la solution à pulvériser du réservoir intermédiaire 126 vers la buse 2. Lorsque le réservoir se trouve à l'intérieur de la buse 2, cette dernière n'a pas besoin de pompe pour la pulvérisation.

Le réservoir intermédiaire 126 permet la régulation de la buse contenant à la fois la solution nutritive à pulvériser et en récupérant l'excès de solution non pulvérisée. De préférence, le réservoir intermédiaire 126 contient juste la quantité de solution de nutriments nécessaire pour une séance de pulvérisation.

Une première solution de nutriments est utilisée pour arroser, par pulvérisation, les plantes d'une première étagère 110. De la solution est pulvérisée dans chaque chambre racinaire de l'étagère. Ainsi, lorsque le robot nébuliseur 1 se déplace le long du mur et arrive au-dessus d'une autre étagère 110, une solution nutritive différente peut être nécessaire, en fonction des plantes présentes dans cette autre étagère.

Une même buse 2 est utilisée pour arroser d'une même solution un certain nombre de plantes puis se déplace, pour arroser de d'une autre solution des plantes différentes. Bien sûr, lorsque les plantes dans les étagères composant un mur sont les mêmes, les solutions stockées pour chaque étagère sont également les mêmes.

La solution d'arrosage d'une étagère non absorbée par les racines retombe par gravité dans les chambres racinaires et s'écoule dans le réservoir de stockage.

Les moyens d'approvisionnement peuvent former un circuit fermé. Ceci signifie que :
- les solutions pulvérisées et non absorbées par les racines sont récupérées dans les réservoirs de stockage 124 pour chaque étagère 110 pour être réutilisées ou recyclées, et/ou
- la solution de nutriments mixée dans le réservoir de dosage 120 peut être recyclée à tout moment et remplacée en fonction du besoin des plantes,

Le recyclage des solutions est réalisé par la filtration par un système de filtration à osmose inverse et la réutilisation de l'eau filtrée. Les membranes dans lesquelles sont piégés les nutriments sont remplacées régulièrement, par exemple une fois par an.

Lorsque différentes plantes, demandant différentes solutions de nutriments, sont présentes dans chaque structure 110 formant le mur et une seule tête de pulvérisation est utilisée pour ce mur, il est alors nécessaire de pulvériser les différentes solutions de nutriments avec la même tête de pulvérisation, et notamment avec la même buse.

Dans ce cas notamment, une fois la solution de nutriments pour une structure de support 110 pulvérisée, la tête de pulvérisation se déplace vers la structure suivante et une solution de nettoyage est pulvérisée. Cette solution de nettoyage permet de nettoyer la ou les buses. Elle est inoffensive pour les plantes. La solution de nettoyage peut être, par exemple, une solution d'acide hypochloreux.

Les buses peuvent être nettoyées, de manière générale, avant et après chaque pulvérisation, et notamment lorsque des plantes dans les étagères ont été changées.

Le système selon la présente invention comprend en outre des moyens de commande. Les moyens de commande permettent de commander la ou les buses 2, le moteur 3 pour déplacer la tête de pulvérisation 1 et les différentes pompes à eau et péristaltiques du système 100.

Les moyens de commande peuvent comprendre un poste de commande (non représenté). Celui-ci peut être distant de la structure de support des plantes. Ce poste de commande comprend au moins un ordinateur, une unité centrale ou de calcul, un circuit électronique analogique (de préférence dédié), un circuit électronique numérique (de préférence dédié), et/ou un microprocesseur (de préférence dédié), et/ou des moyens logiciels. Le poste de commande peut être agencé pour qu'un opérateur y puisse commander la tête de pulvérisation, le dosage, etc. manuellement.

Le poste de commande peut communiquer avec un cloud où sont stockés des données concernant l'arrosage des plantes. Une base de données comprend la fréquence et la durée de pulvérisation pour chaque plante ou type de plante ainsi que les données nécessaires pour la composition de la solution de nutriments adaptée pour chaque plante ou type de plante. Le poste de commande peut également communiquer, par exemple via Bluetooth, avec des microcontrôleurs, afin de transmettre des commandes reçues du cloud.

Une unité de calcul, réalisant les opérations du poste de commande, peut être disposé sur un élément du système de culture, par exemple sur un bras robotique manipulant les plantes dans les étagères, ou dans une des étagères même.

Les moyens de commande peuvent comprendre en outre des microcontrôleurs (non représentés).

Les pompes 122 associées aux réservoirs des nutriments N_{X}) sont contrôlées par des microcontrôleurs recevant des commandes du cloud via la centrale de calcul, permettant de commander le dosage des différents nutriments (c'est-à-dire, en fonction des plantes présentes dans la structure). Les pompes 122 sont de préférence des pompes péristaltiques, avec un moteur pas-à-pas. Les microcontrôleurs peuvent être, par exemple, des microcontrôleurs ESP32. Ces microcontrôleurs se caractérisent par une connectivité Bluetooth/Wi-Fi et sont très économiques. Les microcontrôleurs peuvent être connectés aux pompes en filaire, chaque pompe ayant son microcontrôleur.

Le moteur de chaque pompe 122 peut être équipé d'une carte pilote (par exemple du type A4988) permettant de recevoir et exécuter des commandes reçus par le microcontrôleur. Chaque microcontrôleur envoie une commande à la carte pilote de la pompe 122 correspondante. Cette commande est de type « On/Off », correspondant à la marche et à l'arrêt de la pompe 122, respectivement. La durée du « On » définit la quantité de solution prélevée du réservoir de nutriments N_{X} concerné.

Le moteur 3 associé à la buse 2 de pulvérisation est également pourvu d'un microcontrôleur permettant d'activer et de désactiver la pulvérisation et d'activer et de désactiver le moteur 3. Le microcontrôleur est de préférence fixé sur le moteur 3 sur la tête de pulvérisation 1. Il peut, par exemple, s'agir d'un microcontrôleur ESP32. Le moteur 3 peut être équipé d'une carte pilote (par exemple du type A4988) permettant de recevoir et exécuter des commandes reçus par le microcontrôleur.

S'il y a une déconnexion entre le poste de commande et le cloud ou entre le poste de commande et un microcontrôleur, les microcontrôleurs peuvent continuer de fonctionner selon la dernière commande reçue.

Un opérateur peut également intervenir sur le cloud depuis le poste de commande pour y effectuer des ajustements, par exemple pour ajuster le débit des pompes par nutriment, le temps de pulvérisation pour une certaine structure de support, etc.

Selon un mode de réalisation du système selon l'invention, le réservoir de dosage 120 et/ou les réservoirs de stockage 124 peuvent être équipés de moyens de mesure, agencés pour mesurer la composition, ou la teneur en nutriments, de la solution de nutriments présenté dans ces réservoirs.

Selon un exemple, les mesures peuvent être réalisées en contrôlant le débit des différentes pompes.

Selon un autre exemple, il est possible d'équiper le réservoir de dosage 120 et/ou les réservoirs de stockage 124 de senseurs de pH pour contrôler la valeur pH des solutions de nutriments.

Selon un mode de réalisation du système selon l'invention, au moins un ventilateur peut être prévu dans la structure de support 110. Le ventilateur se trouve à l'intérieur d'une chambre racinaire. Lorsqu'une solution de nutriments est pulvérisée, le fonctionnement du ventilateur permet de ventiler la solution pulvérisée dans toute la chambre racinaire. Ainsi, les racines de toutes les plantes présentes sont arrosées de manière régulière et homogène, même si des racines d'une plante se trouvent sur la trajectoire des gouttelettes de solution entre la tête de pulvérisation et les racines d'une autre plante.

Selon un exemple, le ventilateur peut être inséré dans une des ouvertures prévues pour les plantes, de sorte à ce qu'il se trouve à l'intérieur d'une chambre racinaire. Le ventilateur peut être alimenté par une batterie.

Bien sûr, l'invention n'est pas limitée aux exemples qui viennent d'être décrits et de nombreux aménagements peuvent être apportés à ces exemples sans sortir du cadre de l'inventior telle que défini par les revendications annexées.

## Revendications

1. Système (100) de culture de plantes hors-sol, le système comprenant une structure de support (110) apte à accueillir les plantes, la structure de support (110) comprenant une pluralité d'espaces fermés étanches à la lumière, chaque espace fermé étant apte à accueillir les racines d'une plante de sorte à ce que les racines de chaque plante se trouvent dans un des espaces fermés, le système (100) comprenant :
- une tête de pulvérisation (1) comprenant au moins une buse de pulvérisation (2) comprenant un pulvérisateur piézoélectrique,
- des moyens d'approvisionnement d'au moins une solution de nutriments pour plantes,
- des moyens de déplacement (3, 10) agencés pour déplacer la tête de pulvérisation (1) entre les espaces fermés, et
- des moyens de commande agencés pour :
o commander l'au moins une buse (2),
o commander les moyens de déplacement (3, 10) de sorte à déplacer la tête de pulvérisation (1) entre les espaces fermés,
la tête de pulvérisation (1) étant agencée pour pulvériser la solution de nutriments dans chaque espace fermé pendant une durée et avec une fréquence prédéterminées.

2. Système (100) selon la revendication 1, **caractérisé en ce que** les moyens d'approvisionnement comprennent :
- des moyens de stockage (N_{1...10}) d'une pluralité de nutriments, et
- une source d'eau filtrée,
les moyens de stockage de nutriments (N_{1...10}) et la source d'eau étant hydrauliquement couplés à l'au moins une buse (2) par un système de pompes (6, 122, 123, 125).

3. Système (100) selon la revendication 2, **caractérisé en ce que** les moyens de stockage comprennent une pluralité de réservoirs (N_{1...10}), chaque réservoir comprenant un nutriment pour plantes.

4. Système (100) selon l'une quelconque des revendications précédentes, **caractérisé en ce que** les moyens d'approvisionnement comprennent au moins un réservoir de dosage (120) agencé pour mixer au moins un des nutriments avec de l'eau afin d'obtenir une solution de nutriments.

5. Système (100) selon la revendication précédente, **caractérisé en ce que** les moyens de commande sont agencés pour doser un ou plusieurs nutriments en fonction des plantes présentes dans la structure (110).

6. Système (100) selon l'une quelconque des revendications précédentes, **caractérisé en ce qu'**il comprend en outre des moyens de nettoyage (128, 129) configurés pour nettoyer l'au moins une buse (2) entre des pulvérisations de solutions de nutriments différentes.

7. Système (100) selon la revendication précédente, **caractérisé en ce que** les moyens de nettoyage (128, 129) comprennent un réservoir de nettoyage (128) comprenant une solution de nettoyage, la tête de pulvérisation (1) étant agencée pour pulvériser la solution de nettoyage dans un espace fermé avant et/ou après la pulvérisation de solution de nutriment.

8. Système (100) selon l'une quelconque des revendications précédentes, **caractérisé en ce que** les moyens d'approvisionnement comprennent des moyens de mesure agencés pour mesurer une teneur en nutriments de la solution.

9. Système (100) selon l'une quelconque des revendications précédentes, **caractérisé en ce que** les moyens de déplacement (3, 10) comprennent des rails horizontaux (10) et/ou verticaux le long desquels la tête de pulvérisation (1) est agencée pour se déplacer.

10. Système (100) selon la revendication précédente, **caractérisé en ce que** les moyens de déplacement (3, 10) comprennent un moteur (3) agencé sur la tête de pulvérisation (1) et agencé pour déplacer la tête (1) sur les rails (10).

11. Système (100) selon l'une quelconque des revendications précédentes, **caractérisé en ce que** les moyens de commande comprennent au moins un microcontrôleur agencé pour contrôler le déplacement de la tête (1) et la durée et la fréquence de la pulvérisation.

12. Système (100) selon l'une quelconque des revendications précédentes, **caractérisé en ce que** les moyens d'approvisionnement forment un circuit fermé.

13. Système (100) selon l'une quelconque des revendications précédentes, **caractérisé en ce qu'**il comprend en outre des moyens pour recycler l'au moins une solution de nutriments.

14. Système (100) selon l'une quelconque des revendications précédentes, **caractérisé en ce qu'**il comprend en outre au moins un ventilateur par espace fermé, le ventilateur étant disposé dans l'espace fermé de sorte à pouvoir ventiler de la solution pulvérisée dans l'ensemble de l'espace fermé.

## Patentansprüche

1. System (100) zur oberirdischen Aufzucht von Pflanzen, wobei das System eine Stützstruktur (110) umfasst, die zur Aufnahme der Pflanzen geeignet ist, wobei die Stützstruktur (110) eine Vielzahl von lichtdichten, geschlossenen Räumen umfasst, wobei jeder geschlossene Raum geeignet ist, die Wurzeln einer Pflanze aufzunehmen, so dass sich die Wurzeln jeder Pflanze in einem der geschlossenen Räume befinden, wobei das System (100) Folgendes umfasst:
- einen Sprühkopf (1) mit mindestens einer Sprühdüse (2), umfassend einen piezoelektrischen Zerstäuber,
- Mittel zur Zuführung von mindestens einer Pflanzennährstofflösung,
- Bewegungsmittel (3, 10), die so angeordnet sind, dass sie den Sprühkopf (1) zwischen den geschlossenen Räumen bewegen, und
- Steuermittel, die so angeordnet sind, dass sie:
• die mindestens eine Düse (2) steuern,
• die Bewegungsmittel (3, 10) so steuern, dass der Sprühkopf (1) zwischen den geschlossenen Räumen bewegt wird,
wobei der Sprühkopf (1) so angeordnet ist, dass er die Nährstofflösung in jedem geschlossenen Raum für eine vorher festgelegte Zeit und mit einer vorher festgelegten Frequenz versprüht.

2. System (100) nach Anspruch 1, **dadurch gekennzeichnet, dass** die Zuführungsmittel Folgendes umfassen:
- Speichermittel (N_{1...10}) für eine Vielzahl von Nährstoffen, und
- eine Quelle für gefiltertes Wasser,
wobei die Nährstoffspeichermittel (N_{1...10}) und die Wasserquelle über ein Pumpensystem (6, 122, 123, 125) mit der mindestens einen Düse (2) hydraulisch gekoppelt sind.

3. System (100) nach Anspruch 2, **dadurch gekennzeichnet, dass** die Speichermittel eine Vielzahl von Behältern (N_{1...10}) umfassen, wobei jeder Behälter einen Pflanzennährstoff enthält.

4. System (100) nach einem der vorhergehenden Ansprüche, **dadurch gekennzeichnet, dass** die Zuführungsmittel mindestens einen Dosierbehälter (120) umfassen, der so angeordnet ist, dass er mindestens einen der Nährstoffe mit Wasser mischt, um eine Nährstofflösung zu erhalten.

5. System (100) nach dem vorhergehenden Anspruch, **dadurch gekennzeichnet, dass** die Steuerungsmittel so angeordnet sind, dass sie einen oder mehrere Nährstoffe in Abhängigkeit von den in der Struktur (110) vorhandenen Pflanzen dosieren.

6. System (100) nach einem der vorhergehenden Ansprüche, **dadurch gekennzeichnet, dass** es ferner Reinigungsmittel (128, 129) umfasst, die so konfiguriert sind, dass sie die zwischen dem Sprühen von verschiedenen Nährstofflösungen mindestens eine Düse (2) reinigen.

7. System (100) nach dem vorhergehenden Anspruch, **dadurch gekennzeichnet, dass** die Reinigungsmittel (128, 129) einen Reinigungsbehälter (128) umfassen, der eine Reinigungslösung umfasst, wobei der Sprühkopf (1) so angeordnet ist, dass er die Reinigungslösung vor und/oder nach dem Sprühen von Nährstofflösung in einen geschlossenen Raum sprüht.

8. System (100) nach einem der vorhergehenden Ansprüche, **dadurch gekennzeichnet, dass** die Zuführungsmittel Messmittel umfassen, die so angeordnet sind, dass sie einen Nährstoffgehalt der Lösung messen.

9. System (100) nach einem der vorhergehenden Ansprüche, **dadurch gekennzeichnet, dass** die Bewegungsmittel (3, 10) horizontale (10) und/oder vertikale Schienen umfassen, entlang derer der Sprühkopf (1) zum Bewegen angeordnet ist.

10. System (100) nach dem vorhergehenden Anspruch, **dadurch gekennzeichnet, dass** die Bewegungsmittel (3, 10) einen Motor (3) umfassen, der an dem Sprühkopf (1) angeordnet ist und angeordnet ist, um den Kopf (1) auf den Schienen (10) zu bewegen.

11. System (100) nach einem der vorhergehenden Ansprüche, **dadurch gekennzeichnet, dass** die Steuerungsmittel mindestens einen Mikrocontroller umfassen, der so angeordnet ist, dass er die Bewegung des Kopfes (1) und die Dauer und Sprühfrequenz steuert.

12. System (100) nach einem der vorhergehenden Ansprüche, **dadurch gekennzeichnet, dass** die Zuführungsmittel einen geschlossenen Kreislauf bilden.

13. System (100) nach einem der vorhergehenden Ansprüche, **dadurch gekennzeichnet, dass** es ferner Mittel zum Recyceln der mindestens einen Nährstofflösung umfasst.

14. System (100) nach einem der vorhergehenden Ansprüche, **dadurch gekennzeichnet, dass** es ferner mindestens einen Ventilator pro geschlossenem Raum umfasst, wobei der Ventilator in dem geschlossenen Raum so angeordnet ist, dass er die versprühte Lösung in den gesamten geschlossenen Raum ventilieren kann.

## Claims

1. A system (100) for growing plants above ground, the system comprising a support structure (110) adapted to receive the plants, the support structure (110) comprising a plurality of light-tight closed spaces, each closed space being adapted to receive the roots of a plant so that the roots of each plant are in one of the closed spaces, the system (100) comprising:
- a spray head (1) comprising at least one spray nozzle (2) comprising a piezoelectric sprayer,
- means for supplying at least one plant nutrient solution,
- moving means (3, 10) arranged to move the spray head (1) between enclosed spaces, and
- control means arranged to:
o control at least one nozzle (2),
o control the moving means (3, 10) so as to move the spray head (1) between the closed spaces,
the spray head (1) being arranged to spray the nutrient solution into each enclosed space for a predetermined time and with a predetermined frequency.

2. The system (100) according to claim 1, **characterized in that** the supply means comprise:
- storage means (N1...10) for a plurality of nutrients, and
- a filtered water source,
the nutrient storage means (N1...10) and the filtered water source being hydraulically coupled to the at least one nozzle (2) by a pump system (6, 122, 123, 125).

3. The system (100) according to claim 2, **characterized in that** the storage means comprise a plurality of reservoirs (N1...10), each reservoir comprising a plant nutrient.

4. The system (100) according to any of the preceding claims, **characterized in that** the supply means comprise at least one dosing tank (120) arranged to mix at least one of the nutrients with water to obtain a nutrient solution.

5. The system (100) according to the preceding claim, **characterized in that** the control means are arranged to dose one or more nutrients as a function of the plants present in the structure (110).

6. The system (100) according to any of the preceding claims, **characterized in that** it further comprises cleaning means (128, 129) configured to clean the at least one nozzle (2) between sprays of different nutrient solutions.

7. The system (100) according to the preceding claim, **characterized in that** the cleaning means (128, 129) comprise a cleaning tank (128) comprising a cleaning solution, the spray head (1) being arranged to spray the cleaning solution into a closed space before and/or after spraying of nutrient solution.

8. The system (100) according to any one of the preceding claims, **characterized in that** the supply means comprise measuring means arranged to measure a nutrient content of the food.

9. The system (100) according to any of the preceding claims, **characterized in that** the moving means (3, 10) comprise horizontal (10) and/or vertical rails along which the spray head (1) is arranged to move.

10. The system (100) according to the preceding claim, **characterized in that** the moving means (3, 10) comprise a motor (3) disposed on the spray head (1) and configured to move the head (1) on the rails (10).

11. The system (100) according to any of the preceding claims, **characterized in that** the control means comprise at least one microcontroller arranged to control the movement of the head (1) and the duration and frequency of spraying.

12. The system (100) according to any of the preceding claims, **characterized in that** the supply means form a closed circuit.

13. The system (100) according to any of the preceding claims, **characterized in that** it further comprises means for recycling the at least one nutrient solution.

14. The system (100) according to any of the preceding claims, **characterized in that** it further comprises at least one fan per closed space, the fan being arranged in the closed space so as to be able to ventilate sprayed solution throughout the closed space.
